# EUROPÄISCHE PATENTANMELDUNG

(11) **EP 4 148 417 A1**
(43) Veröffentlichungstag der Anmeldung: **15.03.2023**
(21) Anmeldenummer: 21195664.4
(22) Anmeldetag: 09.09.2021
(51) Int. Cl.: G01N 21/65, G01J 3/44

(54) **RAMAN-PHOTOMETER ZUR SIMULTANEN MULTIKOMPONENTENANALYSE; MESSSYSTEM UND COMPUTERPROGRAMMPRODUKT**

(71) Anmelder: Siemens Aktiengesellschaft, 80333 München (DE)
(72) Erfinder: Harr, Konstantin, 76133 Karlsruhe (DE); Heffels, Camiel, 76297 Stutensee-Büchig (DE)
(74) Vertreter: Siemens Patent Attorneys

(57) **Zusammenfassung**

Die Erfindung betrifft ein Raman-Photometer (10), das ein Grundmodul (20) mit einer Messzelle (22) umfasst, die zu einem Erzeugen einer Raman-Strahlung (25) dient, die durch eine Stoffprobe (15) emittiert wird. Das Raman-Photometer (10) umfasst auch zumindest ein Erweiterungsmodul (30, 31, 32). Erfindungsgemäß weist das Erweiterungsmodul (30, 31, 32) zumindest ein erstes teildurchlässiges Interferenzfilter (36) auf, das zu einem simultanen Erfassen einer ersten und einer zweiten Komponente (16, 17) der Stoffprobe (15) dient. Die Erfindung betrifft ebenso ein Verfahren (100) zu einem Messen einer Zusammensetzung (19) einer Stoffprobe (15), das mit einem derartigen Raman-Photometer (10) durchführbar ist. Weiter betrifft die Erfindung eine Auswertungseinheit (60), die für die Durchführung eines solchen Verfahren (100) ausgebildet ist und ein Spektrometersystem (70), das über ein erfindungsgemäßes Raman-Photometer (10) verfügt. Ebenso betrifft die Erfindung ein Computer-Programmprodukt (80) zum Simulieren eines Betriebsverhaltens eines erfindungsgemäßen Raman-Photometers (10).

## Beschreibung

Die Erfindung betrifft ein Raman-Photometer, das zu einer simultanen Multikomponentenanalyse einer Stoffprobe ausgebildet ist. Die Erfindung betrifft auch ein Messsystem, das über ein solches Raman-Photometer verfügt. Gleichermaßen betrifft die Erfindung ein Computerprogrammprodukt zur Simulation eines Betriebsverhaltens eines derartigen Raman-Photometers.

Aus der Patentanmeldung US 2007/0285658 A1 ist ein Raman-Photometer bekannt, das zu einem beschleunigten Detektieren einer Mehrzahl an Komponenten einer Probe ausgebildet ist. Das Raman-Photometer weist hierzu einen Lichtleiter auf, durch den ein Strahlengang mit einer Raman-Strahlung zu einem drehbaren Prisma geleitet wird. Durch das drehbare Prisma wird der Strahlengang sukzessive zu einer Mehrzahl an Bandpassfiltern geleitet. Die Bandpassfilter sind mit einem einzigen optischen Detektor gekoppelt, der sukzessive die zugeführten gefilterten Strahlengänge erfasst. Dadurch wird das Prinzip eines Zeit-Multiplexings verwirklicht.

In unterschiedlichen industriellen Prozessen ist die Zusammensetzung von Stoffproben zu überwachen, die eine Vielzahl an Komponenten aufweist. Zur Regelung und Steuerung solcher industrieller Prozesse, wie beispielsweise chemische oder pharmazeutische Herstellungsprozesse oder auch Abgasüberwachungen, wird eine schnelle Ermittlung der Zusammensetzung eines überwachten Prozessmediums angestrebt. Gleichzeitig besteht die Anforderung, dass hierfür geeignete Vorrichtungen einfach modifizierbar sein sollen. Der Erfindung liegt die Aufgabenstellung zugrunde, eine Möglichkeit zur Ermittlung einer Zusammensetzung einer Stoffprobe bereitzustellen, die in zumindest einem der dargestellten Punkte eine Verbesserung bietet.

Die Aufgabenstellung wird durch ein erfindungsgemäßes Raman-Photometer gelöst, das ein Grundmodul und ein Erweiterungsmodul umfasst. Im Grundmodul ist eine Messzelle ausgebildet, in der eine Stoffprobe aufnehmbar ist, deren Zusammensetzung zu ermitteln ist. Die Stoffprobe kann in der Messzelle eingeschlossen sein oder sie kann die Messzelle im Betrieb durchströmen. Die Stoffprobe kann ein Gasgemisch sein, Flüssigkeiten und/oder Feststoffe umfassen. Im Betrieb des Raman-Photometers ist die Stoffprobe in der Messzelle bestrahlbar, so dass durch die Stoffprobe eine Raman-Strahlung hervorgerufen wird, die deren Zusammensetzung charakterisiert. Die Raman-Strahlung umfasst die sogenannte Stokes-Raman-Strahlung und die sogenannte Anti-Stokes-Raman-Strahlung, die durch unelastische Streuung an Molekülen der Stoffprobe hervorgerufen werden. Die in der Messzelle erzeugte Raman-Strahlung geht optisch in einem Strahlengang in das zumindest eine Erweiterungsmodul, das mit dem Grundmodul verbunden ist. Das Erweiterungsmodul dient dazu, die einfallende Raman-Strahlung zu erfassen, um so die Zusammensetzung der Stoffprobe zu bestimmen. Erfindungsgemäß weist das Erweiterungsmodul zumindest ein erstes teildurchlässiges Interferenzfilter auf, das die Raman-Strahlung teilweise passieren kann, und die teilweise daran reflektiert wird. Der Teil der Raman-Strahlung, der das erste Interferenzfilter passiert ist charakteristisch für eine erste Komponente der Stoffprobe. Der reflektierte Teil der Raman-Strahlung wiederum umfasst einen Abschnitt, der charakteristisch ist für eine zweite Komponente der Stoffprobe. Beide Anteile breiten sich optisch aus und liegen im Wesentlichen gleichzeitig zu einer Auswertung vor. Das erste teildurchlässige Interferenzfilter dient dadurch erfindungsgemäß einem simultanen Erfassen der ersten und zweiten Komponente der Stoffprobe.

Für die erste und zweite Komponente liegen durch das erste teildurchlässige Interferenzfilter im erfindungsgemäßen Raman-Photometer im Betrieb sofort auswertbare Messsignale vor. Die Stoffprobe ist dadurch in einem verkürzten Intervall mehrfach bestrahlbar um zusätzliche Messwerte für die Zusammensetzung zu erhalten. Infolgedessen ist eine schnelle Ermittlung der Zusammensetzung der Stoffprobe möglich. Gegenüber bekannten Gaschromatographen, wie für einen Messdurchgang Minuten brauchen, ist die Zusammensetzung der Stoffprobe mit dem erfindungsgemäßen Raman-Photometer in unter 60 Sekunden erfassbar. Die erzielbare Abtastrate ist lediglich durch die Dauer begrenzt, mit der die Stoffprobe in der Messzelle austauschbar ist. Das erfindungsgemäße Raman-Photometer verwirklicht insgesamt das Prinzip eines parallelisierten Raman-Photometers. Durch weitere Erweiterungsmodule am Grundmodul ist die Anzahl an gleichzeitig erfassbaren Komponenten der Stoffprobe steigerbar. Das erfindungsgemäße Raman-Photometer ist durch seine gesteigerte Abtastrate dazu geeignet, auch komplexe Stoffproben mit einer Vielzahl an Komponenten schnell in puncto Zusammensetzung zu messen. Dies erlaubt die Verwendung des erfindungsgemäßen Raman-Photometers in der Regelung und Steuerung von industriellen Prozessen, insbesondere chemischen Prozessen, die im Hinblick auf die Zusammensetzung eines Prozessmediums empfindlich sind, beispielsweise in der Medikamentenherstellung.

In einer Ausführungsform des beanspruchten Raman-Photometers ist das erste Interferenzfilter als Bandpassfilter für eine erste Raman-Bande ausgebildet ist. Unter einer Raman-Bande ist hierbei ein Wellenlängenbereich zu verstehen, in dem eine Raman-Strahlung bei einem bestimmten Stoff auftritt. Ein Bandpassfilter verwirklicht in einfacher Weise das Prinzip eines teildurchlässigen Interferenzfilters. Die Raman-Bande, für die das erste Interferenzfilter durchlässig ist, ist mittels einer ersten Empfangsvorrichtung erfassbar, die dem ersten Interferenzfilter zugeordnet ist, also optisch nachgeschaltet ist. Das erste Interferenzfilter und die erste Empfangsvorrichtung sind derart ausgewählt, dass eine Verschiebung der Zentralwellenlänge der einfallenden Raman-Bande berücksichtigt wird. Die erste Empfangsvorrichtung kann insbesondere dazu ausgebildet sein, die empfangene erste Raman-Bande zu quantifizieren, und somit eine Konzentration der ersten Komponente der Stoffprobe zu ermitteln. Durch Auswahl des ersten Interferenzfilters ist somit vorgebbar, welche Raman-Bande durch die erste Empfangsvorrichtung zu erfassen ist. Dementsprechend kann eine für diesen Wellenlängenbereich und eine erwartete Intensität der Raman-Bande eine geeignete Empfangsvorrichtung ausgewählt werden. Technische Kompromisse, die notwendig sind um mehrere Raman-Banden hinreichend genau messen zu können, sind hierdurch entbehrlich. Insbesondere sind gegenüber bekannten Raman-Photometern Schlitzblenden entbehrlich, durch die die Intensitäten der zu erfassenden Raman-Banden reduziert werden. Ferner kann sich eine Auswertung der mit der ersten Empfangsvorrichtung erfassten Messsignale auf nur eine erwartete Raman-Bande fokussieren, was eine vereinfachte, und somit beschleunigte, Verarbeitung der Messsignale erlaubt. Beispielsweise kann mit einer sogenannten multi-linearen Regression eine besonders präzise Auswertung erfolgen. Infolgedessen ist für die erste Komponente eine gesteigerte Messgenauigkeit in einfacher Weise erzielbar. Dies ist auf weitere Empfangsvorrichtungen und weitere teildurchlässige Interferenzfilter im Erweiterungsmodul übertragbar.

Darüber hinaus kann das erste Interferenzfilter zu einem Reflektieren des Strahlengangs der Raman-Strahlung ausgebildet sein, der außerhalb der ersten Raman-Bande liegt. Das erste Interferenzfilter kann dazu, bezogen auf den Strahlengang, schräg ausgerichtet sein. Der reflektierte Strahlengang wird durch das erste Interferenzfilter zu einem zweiten teildurchlässigen Interferenzfilter gelenkt, der im Erweiterungsmodul angeordnet ist. Das zweite Interferenzfilter ist analog dem ersten Interferenzfilter für eine zweite Raman-Bande durchlässig. Dem zweiten Interferenzfilter ist eine zweite Empfangsvorrichtung zugeordnet, also optisch nachgeschaltet, so dass die zweite Raman-Bande durch die zweite Empfangsvorrichtung erfassbar ist. Insbesondere kann das zweite Interferenzfilter als Bandpassfilter ausgebildet sein. Die zweite Raman-Bande ist charakteristisch für eine zweite Komponente der Stoffprobe, so dass mittels der zweiten Empfangsvorrichtung deren Konzentration erfassbar ist. Analog der ersten Empfangsvorrichtung, kann auch die zweite Empfangsvorrichtung gezielt zu einem exakten Erfassen der zweiten Raman-Bande ausgewählt werden. Das Prinzip, durch ein Bandpassfilter zu einer Empfangsvorrichtung passende Raman-Banden passieren zu lassen und die sonstige Raman-Strahlung zu einem weiteren Interferenzfilter zu reflektieren, ist in einfacher Weise skalierbar. Die Skalierbarkeit wird im Wesentlichen durch den am Erweiterungsmodul verfügbaren Bauraum und die Abmessungen der Empfangsvorrichtungen begrenzt.

In einer weiteren Ausführungsform des beanspruchten Raman-Photometers weist dessen Erweiterungsmodul zumindest drei Empfangsvorrichtungen auf. Drei Empfangsvorrichtungen sind bei einer im Wesentlichen quaderförmigen Grundform des Erweiterungsmoduls in einer Ebene platzsparend anbringbar. Alternativ kann das Erweiterungsmodul an einer Seite mit dem Grundmodul verbunden sein und mit fünf Empfangsvorrichtungen versehen sein, die im Wesentlichen auf den verbleibenden Quaderflächen angeordnet sind. Weiter alternativ kann das Grundmodul als Grundform jegliche Polyederform aufweisen, durch die Flächen definiert werden, an denen Erweiterungsmodule anbringbar sind. Die zumindest drei Empfangsvorrichtungen sind beim beanspruchten Raman-Photometer in einfacher Weise von außen zugänglich, was eine schnelle und einfacher Wartung erlaubt, insbesondere in modulares Austauschen von Empfangsvorrichtungen. Durch die separate Auswertung einzelner Raman-Banden durch einzeln zugeordnete Empfangsvorrichtungen sind Defekte dieser oder ihrer zugeordneten Interferenzfilter zielgerichtet identifizierbar, wodurch eine Reparatur vereinfacht wird. Ebenso wird durch den skizzierten Aufbau eine schnelle Modifikation des Raman-Photometers ermöglicht. Dieses ist folglich applikationsorientiert variabel aufbaubar.

Ferner kann zumindest eine der Empfangsvorrichtungen im beanspruchten Raman-Photometer also Photodetektor, beispielsweise als Photomultiplier oder Mikrophotomultiplier, ausgebildet sein. Diese erlauben es, einzelne Photonen nachzuweisen und bieten somit eine erhöhte Sensitivität bei der Messung einer Raman-Bande. Dadurch, dass die Interferenzfilter teildurchlässig sind, ist nur ein begrenzter Strahlungseinfall auf den Photodetektor zu erwarten, so dass dessen Sensitivität weitestgehend ausnutzbar ist. Des Weiteren kann die Messdauer bei einer solchen Empfangsvorrichtung minimiert werden. Ferner kann die zumindest eine als Photodetektor ausgebildete Empfangsvorrichtung über ein Kühlsystem verfügen, durch das bei erhöhten Umgebungstemperaturen ein sogenanntes Detektorrauschen reduzierbar ist. Dabei kann die Empfangsvorrichtung beispielsweise als sogenannter Photomultiplier ausgebildet sein. Die Erfindung basiert unter anderem auf der überraschenden Erkenntnis, dass eine Wärmeabgabe in die Umgebungsluft auch für eine langanhaltenden Betrieb ausreichend ist. Das beanspruchte Raman-Photometer ist hierdurch platzsparend und kosteneffizient herstellbar. Der Photodetektor kann alternativ auch als sogenannte Avalanche-Photodiode, als electron-multiplying CCD, kurz EMCCD, als Einzelphoton-LawinenDiode, auch als SPAD bezeichnet, als Lawinendiode im Geiger-Modus, kurz GAPD ausgebildet sein. Bei niedrigen Intensitäten der entsprechenden Raman-Banden können Empfangsvorrichtungen eingesetzt werden, die zum Zählen von Photonenpulsen geeignet sind. Bei erhöhten Konzentrationen der Komponenten der Stoffprobe oder bei einer Stoffprobe mit einer Flüssigkeit oder einem Feststoff kann die Empfangsvorrichtung zum Erfassen eines Photonenstroms ausgebildet sein.

Des Weiteren kann die Messzelle im Grundmodul dazu ausgebildet sein, dass der Strahlengang, der von der Raman-Strahlung erzeugt wird, im Wesentlichen senkrecht zu einer Strahlrichtung einer Anregungslichtquelle aus der Messzelle abstrahlt, also austritt. Die Anregungslichtquelle ist mit dem Grundmodul verbunden und dazu ausgebildet, die Stoffprobe direkt zu bestrahlen. Durch das Bestrahlen ist in Molekülen der Stoffprobe ein virtueller Energieniveauübergang hervorrufbar, durch den die Raman-Strahlung und eine Rayleigh-Strahlung erzeugt werden. Auf der der Anregungslichtquelle abgewandten Seite des Grundmodul kann eine Lichtfalle angeordnet sein, durch die Streulicht infolge von Wandreflexionen reduzierbar ist. Hierdurch ist ein Hintergrundsignal reduzierbar. Die Anregungslichtquelle ist an einer Seitenfläche des Grundmoduls befestigbar, wo eine gute Zugänglichkeit, beispielsweise für einen Reparaturvorgang, gegeben ist. Senkrecht zur Strahlrichtung der Anregungslichtquelle liegt im Wesentlichen die zu analysierende Raman-Strahlung und zu unterdrückende Rayleigh-Strahlung vor. Die Rayleigh-Strahlung ist beispielsweise durch ein Kantenfilter in einfacher Weise herausfilterbar. Demzufolge ist die senkrecht zur Strahlrichtung der Anregungslichtquelle abgegebene Raman-Strahlung weitestgehend frei von Störeinflüssen, was eine gesteigerte Messgenauigkeit ermöglicht. Alternativ oder ergänzend kann die Messzelle auch im Sinne eines Explosionsschutzes druckfest ausgebildet sein. Dadurch sind Stoffproben unter Drücken analysierbar, die höher sind als ein Umgebungsluftdruck. Je höher ein Druck bei der Stoffprobe ist, umso höhere Intensitäten sind für die erzeugte Raman-Strahlung erzielbar. Dies erlaubt es beispielsweise, bei Komponenten der Stoffprobe, die in reduzierter Konzentration vorliegen, eine erhöhte Messgenauigkeit zu erzielen.

In einer weiteren Ausführungsform des beanspruchten Raman-Photometers ist die Anregungslichtquelle als Laser ausgebildet, insbesondere als Laser mit einer zentralen Wellenlänge von 350 nm bis 450 nm. Eine derartige zentrale Wellenlänge liegt im Spektrum des sichtbaren Lichts, etwa in einer Spanne von Violett bis Blau. Das zumindest eine Interferenzfilter ist dadurch als einfach Glasoptik ausbildbar. Anspruchsvolle Komponenten wie Quarzoptiken, sind hierdurch entbehrlich. Laser mit einer derartigen Wellenlänge werden auch in anderen technischen Gebieten, beispielsweise der Additiven Fertigung oder der Biomedizin verwendet und sind infolgedessen gut verfügbar und kosteneffizient. Ferner sind Laser mit einer solchen zentralen Wellenlänge für das Erzeugen von Raman-Strahlung besonders effektiv, da die Intensität einer Raman-Strahlung indirekt proportional zur vierten Potenz ihrer Anregungswellenlänge ist. Beispielsweise sind mittels eines Lasers mit einer zentralen Wellenlänge von 402 nm für Wasserstoff, Sticksoff, Kohlendioxid, Sauerstoff, Methan, Ethan, Propan, n-Butan und Wasser Raman-Banden mit Zentralwellenlängen von 410 nm bis 490 nm erzeugbar. Diese sind wiederum in einfacher Weise eindeutig unterscheidbar, so dass eine zuverlässige Messung gewährleistet ist. Ebenso ist die Verwendung von aufwendigen oder größeren Anregungslichtquellen wie im Stand der Technik, beispielsweise HeNe-Laser, entbehrlich.

Ferner kann zumindest das erste Interferenzfilter eine Halbwertbreite von bis zu 20 nm, insbesondere von bis zu 10 nm, um eine Zentralwellenlänge aufweisen. Durch Halbwertbreite ist ein Wellenlängenfenster um die Zentralwellenlänge des jeweiligen Interferenzfilters definiert, in dem dieses durchlässig ist. Interferenzfilter sind in einfacher Weise mit präzisen Halbwertbreiten herstellbar, so dass die Teildurchlässigkeit des ersten Interferenzfilters genau einstellbar ist. Ferner sind Interferenzfilter, die so das Prinzip eines Bandpassfilters verwirklichen, in definierter Form als Ersatzteile herstellbar. Insbesondere werden derartige Bandpassfilter in anderen technischen Gebieten eingesetzt und werden in Serie produziert. Dementsprechend sind die skizzierten Bandpassfilter kosteneffizient verfügbar. Zumindest das erste Interferenzfilter ist dadurch in einfacher Weise austauschbar. Dies erlaubt eine vereinfachte Reparatur des beanspruchten Raman-Photometers. Ebenso ist das Erweiterungsmodul des Raman-Photometers durch Austausch eines Interferenzfilters schnell auf eine andere Raman-Bande anpassbar. Insgesamt ist das beanspruchte Raman-Photometer in einfacher Weise auf andere Anwendungsfälle umrüstbar.

Darüber hinaus kann das beanspruchte Raman-Photometer zumindest ein teildurchlässiges Interferenzfilter aufweisen, das eine Zentralwellenlänge von 350 nm bis 555 nm aufweist. Auch dieses Spektrum liegt im Abschnitt von sichtbarem Licht und kann in einfacher Weise durch die Empfangsvorrichtung erfasst werden. Insbesondere bei einer Anregung der Stoffprobe mit einem Laser, der eine zentrale Wellenlänge von 350nm bis 550nm aufweist, sind Raman-Strahlungen im Bereich von 350 nm bis 555 nm erzeugbar. In diesem Bereich sind einzelne Komponenten der Stoffprobe eindeutig unterscheidbar.

Ebenso kann beim beanspruchten Raman-Photometer das Grundmodul mit zwei bis sechs Erweiterungsmodulen verbunden sein. Zumindest eines der Erweiterungsmodule kann dabei zerstörungsfrei lösbar mit dem Grundmodul gekoppelt sein. Da je Erweiterungsmodul ohne Weiteres drei Empfangsvorrichtungen angebracht sein können, sind bei sechs Erweiterungsmodulen Stoffproben mit bis zu 18 Komponenten ohne Weiteren im Wesentlichen instantan in puncto Zusammensetzung untersuchbar. Weiter alternativ kann zumindest ein Erweiterungsmodul einen Strahlengangaustritt aufweisen, so dass die einfallende Raman-Strahlung in ein weiteres Erweiterungsmodul lenkbar ist. Auf diesem Wege ist das beanspruchte Raman-Photometer weiter ausbaubar.

Die Aufgabenstellung wird gleichermaßen durch ein erfindungsgemäßes Verfahren gelöst, mit dem eine Zusammensetzung einer Stoffprobe gemessen wird. Dazu wird eine Stoffprobe in einem Raman-Photometer bereitgestellt, die eine Mehrzahl an Komponenten aufweist. In einem ersten Schritt des Verfahrens erfolgt ein Bestrahlen der Stoffprobe mit einer Anregungslichtquelle. Durch das Bestrahlen wird eine Raman-Strahlung, die sogenannte Stokes-Raman-Strahlung und Anti-Stokes-Raman-Strahlung aufweisen kann, erzeugt. Die Raman-Strahlung wird von der Stoffprobe emittiert und breitet sich im Wesentlichen optisch aus. In einem zweiten Schritt erfolgt ein optisches Lenken eines Strahlengangs der emittierten Raman-Strahlung auf ein erstes Interferenzfilter. Das optische Lenken kann mittels einer Blende, einer Linse und anderen optischen Elementen erfolgen. In einem dritten Schritt trifft der Strahlengang aus dem zweiten Schritt auf das erste Interferenzfilter. Beim dritten Schritt wird ein Teil der Raman-Strahlung durch das erste Interferenzfilter durchgelassen zu einer ersten Empfangsvorrichtung. Die erste Empfangsvorrichtung ist zu einem Erfassen einer ersten Raman-Bande ausgebildet. In einem vierten Schritt, der im Wesentlichen simultan zum dritten Schritt abläuft, erfolgt ein zumindest teilweises Reflektieren der verbleibenden Raman-Strahlung am ersten Interferenzfilter zu einem zweiten Interferenzfilter. Der Anteil, der im dritten Schritt nicht zur ersten Empfangsvorrichtung durchgelassen wird, wird somit zumindest teilweise weiterreflektiert. Erfindungsgemäß ist das zweite Interferenzfilter einer zweiten Empfangsvorrichtung optisch vorgeschaltet, die zu einem Erfassen einer zweiten Raman-Bande ausgebildet ist. Infolge der optischen Ausbreitung des Strahlengangs mit der Raman-Strahlung, erreichen die erste und zweite Raman-Bande im Wesentlichen simultan die erste bzw. zweite Empfangsvorrichtung. Die erste und zweite Raman-Bande sind charakteristisch für eine erste und zweite Komponente der Stoffprobe, die so separat mit erhöhter Präzision vermessen werden können. Die Empfangsvorrichtungen sind dazu ausgebildet, eine Intensität der einfallenden Raman-Bande zu erfassen, woraus eine Konzentration der jeweiligen Komponente ableitbar ist. Mittels des erfindungsgemäßen Verfahrens können auch komplexe Stoffproben mit einer Vielzahl an Komponenten schnell und genau auf ihre Zusammensetzung hin untersucht werden. Das erfindungsgemäße Verfahren basiert mit dem teildurchlässigen ersten Interferenzfilter auf einer relativ einfachen passiven Komponente. Dementsprechend wird in überraschend einfacher Weise das Konzept eines parallelisierten Raman-Photometers verwirklicht. Über die erste und zweite Empfangsvorrichtung sind folglich im Wesentlichen simultan Messsignale bereitstellbar, die durch eine Auswertungseinheit des Raman-Photometers auswertbar sind. Die Rechenleistung heutiger Auswertungseinheiten ist durch diese simultanen Messsignale technisch sinnvoll ausnutzbar. Insbesondere ist mit dem erfindungsgemäßen Verfahren für eine breite Spanne an Anwendungsfällen Echtzeitfähigkeit erzielbar. Dies erlaubt insbesondere die Steuerung und Regelung von industriellen Prozessen mit einem empfindlichen Prozessmedium. Das erfindungsgemäße Verfahren kann insbesondere mittels eines Raman-Photometers nach einer der oben skizzierten Ausführungsformen durchgeführt werden. Die technischen Aspekte des Raman-Photometers sind deshalb ohne Weiteres separat oder kombiniert auf das skizzierte Verfahren übertragbar.

In einer Ausführungsform des beanspruchten Verfahrens erfolgen das Erfassen der ersten Raman-Bande durch die erste Empfangsvorrichtung und das Erfassen der zweiten Raman-Bande durch die zweite Empfangsvorrichtung im Wesentlichen simultan. Demzufolge werden von der ersten und zweiten Empfangsvorrichtung gleichzeitig Messsignale erzeugt, die zu einer Auswertungseinheit übertragen werden. Weiter alternativ können im beanspruchten Verfahren auch mittels eines dritten, vierten, usw. Interferenzfilters auch weitere Raman-Banden separat zu einer dritten, vierten, usw. Empfangsvorrichtung gelenkt werden. Das beanspruchte Verfahren ist daher in einfacher Weise skalierbar.

Die zugrundeliegende Aufgabe wird auch durch eine erfindungsgemäße Auswertungseinheit gelöst, die zur Verwendung im einem Spektrometersystem ausgebildet ist. Das Spektrometer ist dazu ausgebildet, eine Zusammensetzung einer Stoffprobe zu erfassen und verfügt dazu über ein Raman-Photometer. Die Auswertungseinheit ist erfindungsgemäß dazu ausgebildet, Messsignale von zumindest zwei Empfangsvorrichtungen des Raman-Photometers gleichzeitig zu empfangen und auszuwerten. Insbesondere kann die Auswertungseinheit dazu ausgebildet sein, ein Verfahren gemäß einer der oben skizzierten Ausführungsformen durchzuführen, also eine Zusammensetzung der Stoffprobe anhand von Messsignalen zu ermitteln, die durch die Empfangsvorrichtungen des Raman-Photometers im Wesentlichen gleichzeitig erzeugt sind. Insbesondere kann die Auswertungseinheit dazu ausgebildet sein, mit einem Raman-Photometer nach einer der oben dargestellten Ausführungsformen verbunden zu werden. Zur Durchführung des beanspruchten Verfahrens kann die Auswertungseinheit ein Auswertungsprogramm aufweisen, mit dem die empfangenen Messsignale verarbeitet werden. Ferner kann die Auswertungseinheit über eine Künstliche Intelligenz verfügen, die über einen Trainingsdatensatz trainiert ist. Die aus den Messsignalen abgeleiteten Messwerte weisen eine Messungenauigkeit auf, sind also mit einer Toleranzspanne behaftet. Mittels der Künstlichen Intelligenz kann die Messung zu Zusammensetzung weiter verfeinert, also präzisiert werden.

Genauso wird die eingangs skizzierte Aufgabenstellung durch ein erfindungsgemäßen Spektrometersystem gelöst, das dazu ausgebildet ist, eine Zusammensetzung einer Stoffprobe zu ermitteln. Das Spektrometersystem umfasst ein Raman-Photometer und eine damit verbundene Auswertungseinheit. Erfindungsgemäß ist das Raman-Photometer nach einer der oben beschriebenen Ausführungsformen ausgebildet. Ergänzend kann auch die Auswertungseinheit nach einer der oben skizzierten Ausführungsform ausgebildet sein. Das erfindungsgemäße Spektrometersystem bietet eine erhöhte Abtastrate beim Erfassen der Zusammensetzung der Stoffprobe. Insgesamt ist so eine Stoffprobe im Wesentlichen in Echtzeit auf ihre Zusammensetzung hin überwachbar. Das beanspruchte Spektrometersystem ist daher dazu geeignet, industrielle Prozesse mit einem empfindlichen Prozessmedium zu überwachen.

Ferner wird die zugrundeliegende Aufgabe durch ein erfindungsgemäßen Computerprogrammprodukt gelöst, das zu einem Simulieren eine Betriebsverhaltens eines Raman-Photometers ausgebildet ist. Das Computerprogrammprodukt weist hierzu ein Physik-Modul auf, das zumindest zu einem Simulieren eines Reflexionsverhaltens und eines Transmissionsverhaltens eines Interferenzfilters, das mit Raman-Strahlung bestrahlt wird. Ebenso kann das Physik-Modul dazu ausgebildet sein, ein Reaktionsverhaltens zumindest einer Empfangsvorrichtung nachzustellen, die hinter einem solchen Interferenzfilter angeordnet ist. Hierzu kann das zu simulierende Raman-Photometer zumindest teilweise im beanspruchten Computerprogramm abgebildet sein, beispielsweise in seinem baulichen Aufbau und/oder seiner Funktionsweise. Alternativ oder ergänzend kann das Raman-Photometer auch als Rechenmodell im Physik-Modul ausgebildet sein. Das Physik-Modul ist dazu ausgebildet, das Betriebsverhalten des Raman-Photometers unter einstellbaren Betriebsbedingungen nachzustellen. Zu den einstellbaren Betriebsbedingungen gehören beispielsweise eine Zusammensetzung einer Stoffprobe, eine Veränderlichkeit dieser Zusammensetzung, eine zentrale Wellenlänge einer Anregungslichtquelle, der Leistung der Anregungslichtquelle, und/oder ein temperaturabhängiges Transmissions- und Reflexionsverhalten von teildurchlässigen Interferenzfiltern. Das Computerprogrammprodukt kann über eine Datenschnittstelle verfügten, über die entsprechende Daten über eine Benutzereingabe und/oder andere simulationsgerichtete Computerprogramme vorgebbar sind. Ebenso kann das Computerprogrammprodukt über eine Datenschnittstelle zu einem Ausgeben von Simulationsresultaten an einen Benutzer und/oder andere simulationsgerichtete Computerprogrammprodukte verfügen. Mittels des Computerprogrammprodukts ist beispielsweise eine defektes Interferenzfilter, ein falsch ausgerichtetes Interferenzfilter und/oder eine defekte Empfangsvorrichtung im Raman-Photometer selbst, eine fehlerhafte Montage eines Erweiterungsmoduls und/oder eine Fehlfunktion in einem Anlagenprozess erkennbar, aus dem die Stoffprobe entnommen ist. Das beanspruchte Computerprogrammprodukt ist folglich dazu ausgebildet, eine Fehlerdiagnose für ein erfindungsgemäßes Raman-Photometer und/oder einen damit verbundenen Anlagenprozess zu gewährleisten. Dazu kann das zu simulierende Raman-Photometer nach einer der oben beschriebenen Ausführungsformen ausgebildet sein.

Da das zugrundeliegende Raman-Photometer, dessen Betriebsverhalten durch das erfindungsgemäße Computerprogrammprodukt simulierbar ist, das Prinzip eines parallelisierten Raman-Photometers verwirklicht, sind die für die Simulation zu berücksichtigenden Komponenten auch parallel überwachbar. Insbesondere besteht in deren jeweiligen Betriebsverhalten ein reduzierter Grad an Abhängigkeit untereinander. Beispielsweise hängt das simulierte Betriebsverhalten einer Empfangsvorrichtung im Wesentlichen nur vom unmittelbar davor angeordneten Interferenzfilter ab. Korrespondierend zu dieser funktionalen Parallelisierung ergibt sich in überraschender Weise auch die Möglichkeit, das erfindungsgemäße Computerprogrammprodukt in Form von parallelisierten Einzelprozessen ablaufen zu lassen. Dementsprechend ist das erfindungsgemäße Computerprogrammprodukt auch mit reduzierter Rechenleistung hinreichend schnell durchführbar. Insbesondere kann das erfindungsgemäße Computerprogrammprodukt Echtzeitfähigkeit bieten, beispielsweise für eine Echtzeit-Überwachung eines simulierten Raman-Photometers. Nähere Anforderungen, die die Echtzeitfähigkeit definieren, ergeben sich hierbei beispielsweise aus einem Anlagenprozess, in den das Raman-Photometer eingebunden sein kann. Darüber hinaus können mittels des erfindungsgemäßen Computerprogrammprodukts auch mehrere Raman-Photometer in praktikabler Weise in im Rahmen eines Anlagenprozesses überwacht werden. Das Computerprogrammprodukt kann als sogenannter Digitaler Zwilling ausgebildet sein, wie beispielsweise in der Druckschrift US 2017/286572 A1 beschrieben. Der Offenbarungsgehalt von US 2017/286572 A1 wird durch Verweisung in die vorliegende Anmeldung mit einbezogen. Das Computerprogrammprodukt kann monolithisch ausgebildet sein, also vollständig auf einer Hardwareplattform ausführbar. Alternativ kann das Computerprogrammprodukt modular ausgebildet sein und eine Mehrzahl an Teilprogrammen umfassen, die auf separaten Hardwareplattformen ausführbar sind und über eine kommunikative Datenverbindung zusammenwirken. Eine solche kommunikative Datenverbindung kann eine Netzwerkverbindung oder eine Internetverbindung sein. Ferner kann durch das erfindungsgemäße Computerprogrammprodukt ein Raman-Photometer bzw. ein Spektrometersystem per Simulation erprobt und/oder optimiert werden.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der unterschiedlichen Ausführungsformen sind untereinander und mit den oben skizzierten Merkmalen kombinierbar. Es zeigen im Einzelnen:
- FIG 1: den Aufbau einer ersten Ausführungsform des beanspruchten Spektrometersystems in einer geschnittenen Draufsicht;
- FIG 2: eine Detailansicht eines Erweiterungsmoduls des beanspruchten Spektrometersystems in einer geschnittenen Draufsicht;
- FIG 3: ein Diagramm zu einem Stadium einer Ausführungsform des beanspruchten Verfahrens.

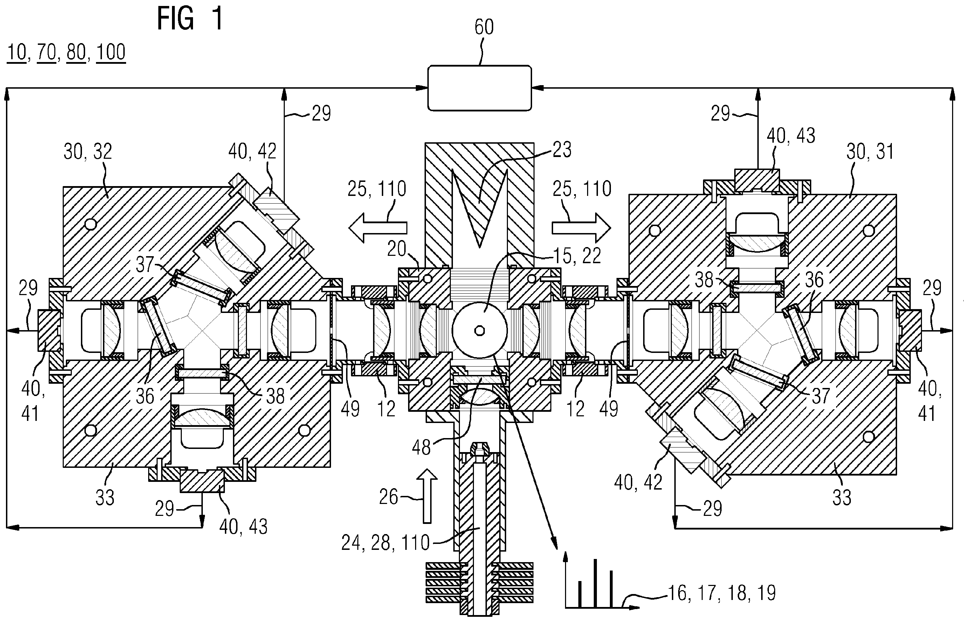

Der Aufbau einer Ausführungsform eines beanspruchten Spektrometersystems 70, das über ein Raman-Photometer 10 verfügt, das mit einer Auswertungseinheit 60 gekoppelt ist, ist in FIG 1 in einer geschnittenen Draufsicht gezeigt. Das Raman-Photometer 10 befindet sich hierbei in einem Stadium eines Verfahrens 100 zum Ermitteln einer Zusammensetzung 19 einer Stoffprobe 15, zu dessen Durchführung das Raman-Photometer 10 eingerichtet ist. Das Raman-Photometer 10 verfügt über ein Grundmodul 20, in dem eine Messzelle 22 ausgebildet ist, in die die Stoffprobe 15 eingebracht wird. Das Grundmodul 20 kann im Sinne eines Explosionsschutzes druckfest ausgebildet sein, so dass auch Stoffproben 15 analysierbar sind, die einen Druck oberhalb eines Umgebungsluftdrucks aufweisen. Je höher der Druck in der Stoffprobe 15, umso höher sind die erfassbaren Intensitäten. Die Stoffprobe 15 umfasst eine erste, zweite und dritte Komponente 16, 17, 18, deren jeweilige Konzentrationen durch das Verfahren 100 zu bestimmen sind. Das Grundmodul 20 ist mit einer Anregungslichtquelle 24 versehen, die als Laser 28 ausgebildet ist und dazu geeignet ist, in einem ersten Schritt 110 die Stoffprobe 15 zu bestrahlen. Zur Steigerung der Strahlqualität des Lasers 28 ist im Grundmodul 20 ein Vorfilter 48 angeordnet, der als Bandpassfilter ausgebildet ist, der im Bereich einer Zentralwellenlänge 54 des Lasers 28 durchlässig ist. Durch das Bestrahlen der Stoffprobe 15 mit der Anregungslichtquelle 24 wird eine Raman-Strahlung 25 hervorgerufen, die durch die Stoffprobe 15 emittiert wird. Zum Zerstreuen eines Lichtstrahls der Anregungslichtquelle 24 ist das Grundmodul 20 an einem der Anregungslichtquelle 24 gegenüberliegenden Bereich mit einer Lichtfalle 23 versehen. Die Lichtfalle 23 kann dazu ausgebildet sein, eine Intensität des Raman-Lichts im Grundmodul 20 um circa den Faktor Zwei zu erhöhen.

Die erzeugte Raman-Strahlung 25 breitet sich am stärksten im Wesentlichen senkrecht zu einer Strahlrichtung 26 der Anregungslichtquelle 24 aus und erreicht Erweiterungsmodule 30, die mit dem Grundmodul 20 verbunden sind. Die Erweiterungsmodule 30 gehören zum Raman-Photometer 10 und weisen jeweils einen Grundkörper 33 auf, der über ein Kopplungselement 12 lösbar mit dem Grundmodul 20 verbunden ist. Das Grundmodul 20 ist mit einem ersten Erweiterungsmodul 31 versehen, das einem zweiten Erweiterungsmodul 32 gegenüberliegend angeordnet ist. Im ersten Erweiterungsmodul 31 sind ein erstes, zweites und drittes Interferenzfilter 36, 37, 38 angeordnet, die jeweils teildurchlässig ausgebildet sind. In das erste Erweiterungsmodul 31 einfallende Raman-Strahlung 25 wird von den Interferenzfiltern 36, 37, 38 teilweise zu einer entsprechend optisch dahinter angeordneten Empfangsvorrichtung 40 durchgelassen. Vom ersten Interferenzfilter 36 durchgelassene Raman-Strahlung 25 erreicht somit eine erste Empfangsvorrichtung 41, vom zweiten Interferenzfilter 37 durchgelassene Raman-Strahlung 25 eine zweite Empfangsvorrichtung 42 und vom dritten Interferenzfilter 38 eine dritte Empfangsvorrichtung 43. Die Empfangsvorrichtungen 40 sind jeweils dazu ausgebildet, korrespondierend zur empfangenen Raman-Strahlung 25 ein Messsignal 29 zu erzeugen, das an die Auswertungseinheit 60 geleitet wird.

Das Raman-Photometer 10 verfügt auch über ein zweites Erweiterungsmodul 32, das in seinem Aufbau im Wesentlichen mit dem ersten Erweiterungsmodul 31 korrespondiert, jedoch nicht identisch ist. Insbesondere unterscheiden sich die Interferenzfilter 36, 37, 38 im ersten und zweiten Erweiterungsmodul 31, 32 in ihrer jeweiligen Konfiguration. Die Interferenzfilter 36, 37, 38 im ersten und zweiten Erweiterungsmodul 31 ,32 sind dazu ausgebildet, unterschiedliche Komponenten der Stoffprobe 15 zu erfassen. Das Raman-Photometer 10 nach FIG 1 ist folglich dazu geeignet, in der Stoffprobe 15 sechs unterschiedliche Komponenten separat zu erfassen. Das Betriebsverhalten des Raman-Photometers 10 gemäß FIG 1 ist mittels eines nicht näher gezeigten Computerprogrammprodukts 80 simulierbar. Das Computerprogrammprodukt 80 ist hierbei als Digitaler Zwilling des Raman-Photometers 10 ausgebildet.

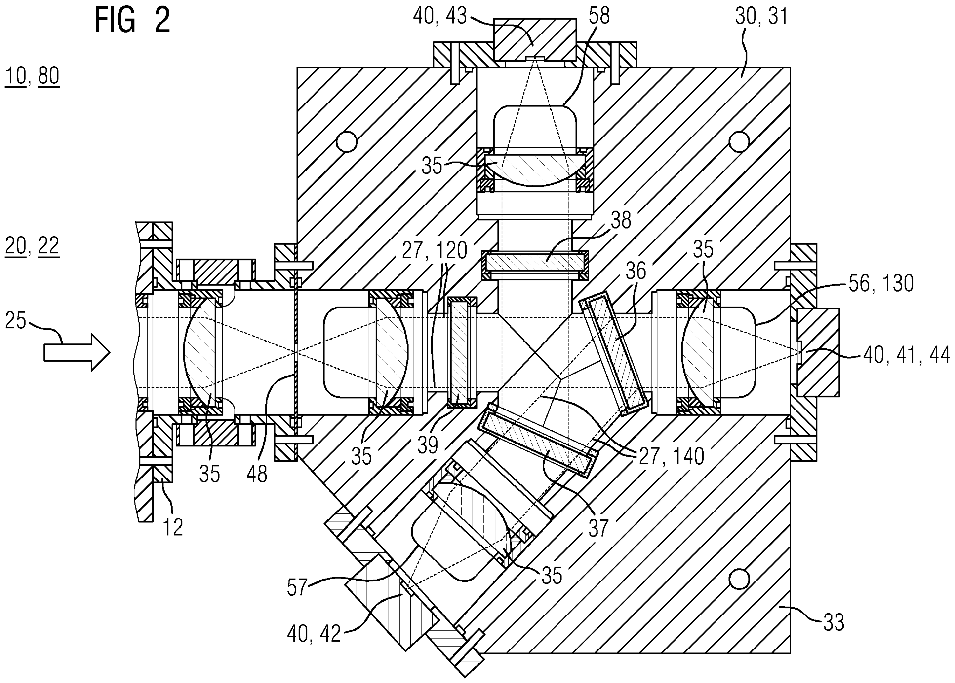

Das erste Erweiterungsmodul 31 eines Raman-Photometers 10 nach FIG 1 ist in FIG 2 in einer Detailansicht gezeigt. Die Raman-Strahlung 25, die in der Messzelle 22 des Grundmoduls 20 hervorgerufen wird, breitet sich durch das Kopplungselement 12 und eine Spaltblende 49 in das erste Erweiterungsmodul 31 aus. Durch die Spaltblende 49 wird ein Teil der Raman-Strahlung 25 in das erste Erweiterungsmodul 31 gelenkt, die in einem mittigen Abschnitt der Messzelle 22 erzeugt wird. Die Ausbreitung der Raman-Strahlung 25 erfolgt in Form eines Strahlengangs 27, der über entsprechende Linsen 35 optisch lenkbar ist. Der Strahlengang 27 wird auch durch ein optisches Filter 39 gelenkt, durch das die Raman-Strahlung 25 vorfilterbar ist und dazu beispielsweise als Kantenfilter ausgebildet ist. In einem zweiten Schritt 120 des Verfahrens 100 wird der Strahlengang 27 optisch zum ersten Interferenzfilter 36 gelenkt, das teildurchlässig ist und als Bandpassfilter ausgebildet ist. Ein Teil des Strahlengangs 27 der Raman-Strahlung 25, der eine erste Raman-Bande 56 umfasst, passiert das erste Interferenzfilter 36 und erreicht in einem dritten Schritt 130 über eine Linse 35 eine erste Empfangsvorrichtung 41, die als Photodetektor 44 ausgebildet ist. Die Empfangsvorrichtung 41 ist dazu ausgebildet, Raman-Strahlung 25 in einem Wellenlängenbereich, der der ersten Raman-Bande 56 entspricht, zu detektieren und quantitativ zu erfassen. Eine Intensität der Raman-Strahlung 25 im Bereich der ersten Raman-Bande 56 korrespondiert mit einer Konzentration der ersten Komponente 16 der Stoffprobe 15, wie in FIG 1 dargestellt. Die erste Empfangsvorrichtung 41 dient somit dazu, die erste Komponente 16 der Stoffprobe 15 zu messen.

Zum Durchlassen der Raman-Strahlung 25 in einem Bereich der ersten Raman-Bande 56 ist das erste Interferenzfilter 36 in Bezug auf den einfallenden Strahlengang 27 geneigt im Grundkörper 33 angeordnet. Durch die geneigte Anordnung des ersten Interferenzfilters 36 wird in einem vierten Schritt 140 des Verfahrens 100 der im dritten Schritt 130 nicht durchgelassene Teil der Raman-Strahlung 25 reflektiert. Die so zumindest teilweise reflektierte Raman-Strahlung 25 wird, wie durch den entsprechenden Strahlengang 27 gezeigt, folglich zum zweiten Interferenzfilter 37 gelenkt. Analog zum ersten Interferenzfilter 36 ist auch das zweite Interferenzfilter 37 teildurchlässig. Raman-Strahlung 25 im Bereich einer zweiten Raman-Bande 57 passiert das zweite Interferenzfilter 37 und wird mittels einer Linse 35 zur einer zweiten Empfangsvorrichtung 42 gelenkt. Korrespondierend zur ersten Empfangsvorrichtung 41 ist die zweite Empfangsvorrichtung 42 dazu ausgebildet, Raman-Strahlung 25 im Wellenlängenbereich der zweiten Raman-Bande 57 quantitativ zu erfassen. Die Intensität der Raman-Strahlung 25 im Wellenlängenbereich der zweiten Raman-Bande 57 ist ein Maß für die Konzentration der zweiten Komponente 17 der Stoffprobe 15, wie in FIG 1 gezeigt. Weiter analog zum ersten Interferenzfilter 36 ist auch das zweite Interferenzfilter 37 in Bezug auf den einfallenden Strahlengang 27 geneigt im Grundkörper 33 angeordnet. Der Teil der Raman-Strahlung 25, der außerhalb der zweiten Raman-Bande 57 liegt, wird zu einem dritten Interferenzfilter 38 gelenkt.

Das dritte Interferenzfilter 38 ist ebenfalls teildurchlässig ausgebildet. Insbesondere ist das dritte Interferenzfilter 38 dazu ausgebildet, Raman-Strahlung 25 im Bereich einer dritten Raman-Bande 58 durchzulassen. Optisch hinter dem dritten Interferenzfilter 38 ist eine dritte Empfangsvorrichtung 43 angeordnet, die zu einem quantitativen Erfassen von Raman-Strahlung 25 im Wellenlängenbereich der dritten Raman-Bande 58 ausgebildet ist. Die Intensität der Raman-Strahlung 25 im Wellenlängenbereich der dritten Raman-Bande 58 ist ein Maß für die Konzentration der dritten Komponente 18 der Stoffprobe 15, wie in FIG 1 dargestellt.

Infolge der optischen Ausbreitung der Raman-Strahlung 25 entlang des Strahlengangs 27 sind die Empfangsvorrichtungen 40, also die erste, zweite und dritte Empfangsvorrichtung 41,42, 43, gleichzeitig betreibbar. Zumindest die erste und zweite Raman-Bande 56, 57 sind im Wesentlichen gleichzeitig, also simultan, durch die erste bzw. zweite Empfangsvorrichtung 41, 42 empfangbar und erfassbar. Hierzu sind der erste Schritt 110 des Verfahrens 100, wie in FIG 1 gezeigt, sowie der zweite dritte und vierte Schritt 120, 130, 140 im Wesentlichen gleichzeitig durchführbar. Dementsprechend sind wenigstens die erste und zweite Komponente 16, 17 der Stoffprobe 15 zumindest in puncto Konzentration simultan erfassbar. Hierdurch wird das Prinzip eines parallelisierten Raman-Photometers 10 verwirklicht. Zumindest die erste und zweite Komponente 16, 17 der Stoffprobe 15 sind im ersten Erweiterungsmodul 31 im Wesentlichen in Echtzeit erfassbar. Ferner sind die Empfangsvorrichtungen 40 separat von außen zugänglich und austauschbar. Das erste Erweiterungsmodul 31 ist dadurch nicht nur als Ganzes austauschbar, sondern auch selbst modular reparierbar. Ferner ist das erste Erweiterungsmodul 31 durch Austausch von Empfangsvorrichtungen 40 auf andere zu erwartende Zusammensetzungen 19 der Stoffprobe 15 anpassbar. Mittels des ersten Erweiterungsmoduls 31 gemäß FIG 2 sind insgesamt eine erste, zweite und dritte Komponente 16, 17, 18 der Stoffprobe 15 simultan erfassbar. Das Funktionsprinzip des ersten Erweiterungsmoduls 31 ist analog auf das zweite Erweiterungsmodul 32 des Raman-Photometers 10 nach FIG 1 übertragbar. Durch entsprechende Auswahl an Interferenzfiltern 36, 37, 38 und Empfangsvorrichtungen 40 im ersten und zweiten Erweiterungsmodul 31, 32 sind durch diese insgesamt sechs unterschiedliche Komponenten der Stoffprobe 15 gleichzeitig erfassbar. Das Reflexions- und Transmissionsverhalten des Strahlengangs 27 der Raman-Strahlung 25 an den Interferenzfiltern 36, 37, 38 in einem Erweiterungsmodul 30 gehört zum Betriebsverhalten des zugehörigen Raman-Photometers 10. Ebenso gehört das Empfangsverhalten der Empfangsvorrichtungen 40 zum Betriebsverhalten des Raman-Photometers 10. Das Betriebsverhalten ist mittels eines nicht näher gezeigten Computerprogrammprodukts 80 simulierbar. Dazu ist das Computerprogrammprodukt 80 als Digitaler Zwilling des Raman-Photometers 10 ausgebildet.

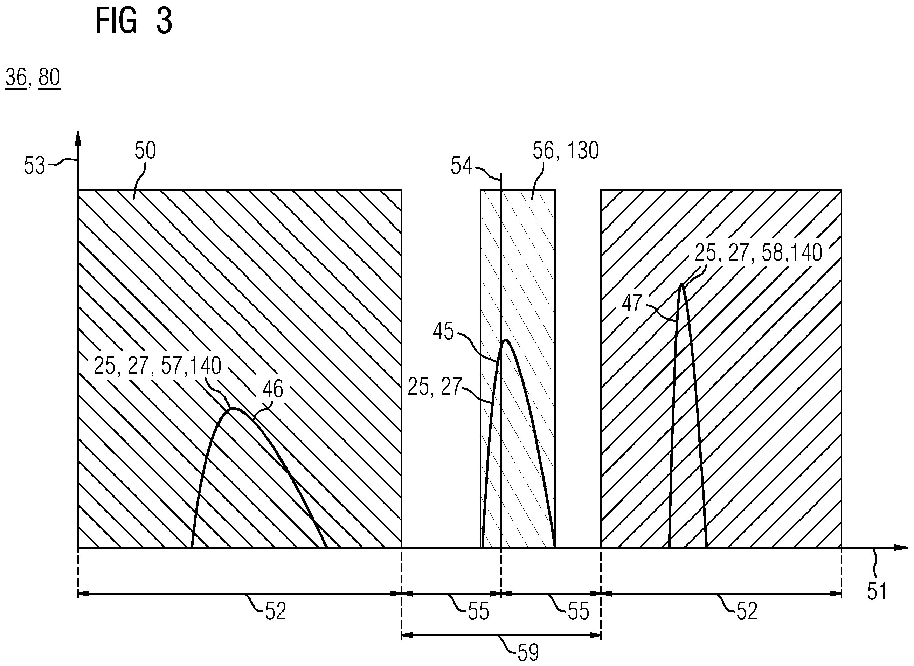

FIG 3 zeigt ein Diagramm 50, das eine Funktionsweise des ersten Interferenzfilters 36 bei einem dritten und vierten Schritt 130, 140 des beanspruchten Verfahrens 100 schematisch in einem Diagramm 50 darstellt. Das Diagramm 50 weist eine horizontale Wellenlängenachse 51 auf, die vorliegende Wellenlänge einer Raman-Strahlung 25 anzeigt. Das Diagramm 50 weist auch eine vertikale Intensitätsachse 53 auf, die die Intensität der entsprechenden Raman-Strahlung 25 anzeigt. Die Raman-Strahlung 10 weist drei Spitzen, sogenannte Peaks 45, 46, 47, auf, die unterschiedliche Wellenlängen haben. Durch jedes Peak 45, 46, 47 ist im Wesentlichen eine Raman-Bande 56, 57, 58 definiert. In einem Bereich des ersten Peaks 45 liegt bei einem ersten Interferenzfilter 36 ein Transmissionsabschnitt 59 vor, in dem das erste Interferenzfilter 36 durchlässig ist. Das erste Peak 45 liegt innerhalb einer ersten Raman-Bande 56, die das erste Interferenzfilter 36 passieren kann und beispielsweise über eine erste Empfangsvorrichtung 41, wie in FIG 1 gezeigt, erfasst werden. Der Transmissionsbereich 59 weist eine Zentralwellenlänge 54, die im Wesentlichen eine Mittellage des Transmissionsabschnitts 59 definiert. Der Transmissionsabschnitt 59 ist ferner durch Halbwertbreiten 55 definiert, die sich beidseitig der Zentralwellenlänge 54 erstrecken. Beim ersten Interferenzfilter 36 ist die Zentralwellenlänge 54 derart gewählt, dass diese im Wesentlichen mit dem ersten Peak 45, und damit der ersten Raman-Bande 56 koinzidiert. Hierdurch liegt für die erste Raman-Bande 56 eine gesteigerte Transparenz im ersten Interferenzfilter 36 vor. Das Durchlassen der ersten Raman-Bande 56 erfolgt im dritten Schritt 130 des Verfahrens 100, wie unter anderem in FIG 2 gezeigt. Die erste Raman-Bade 56 und die dort vorliegende Intensität sind ein Maß für die Konzentration einer ersten Komponente 16 der zu untersuchenden Stoffprobe 15, wie in FIG 1 dargestellt.

Im Bereich eines zweiten und eines dritten Peaks 46, 47 ist das erste Interferenzfilter 36 undurchlässig ausgebildet. Dadurch, dass das erste Interferenzfilter 36 schräggestellt montiert ist, erfolgt außerhalb des Transmissionsabschnitts 59 eine Reflexion der Raman-Strahlung 25. Das erste, zweite und dritte Peak 45, 46, 47 gehören zum gleichen Strahlengang 27, in den die Raman-Strahlung 25 gelenkt ist. Entlang der Wellenlängenachse 51 sind die zugehörigen Reflexionsabschnitte 52 beidseitig des Transmissionsabschnitts 59 positioniert. Die Raman-Strahlung 25 wird im Bereich der zweiten und dritten Raman-Bande 57, 58 zu einem zweiten Interferenzfilter 37 reflektiert, wie beispielsweise in FIG 2 erkennbar. Das Reflektieren des Strahlengangs 27 mit der zweiten und dritten Raman-Bande 57, 58 erfolgt in einem vierten Schritt 140 des beanspruchten Verfahrens 100. Durch das kombinierte Reflextieren und Durchlassen eines Strahlengangs 27 mit Raman-Strahlung 25 ergibt sich, dass das erste Interferenzfilter 36 teildurchlässig ist.

Der Transmissionsabschnitt 59 weist Halbwertbreiten 55 von jeweils bis zu 20nm auf. Da im dritten Schritt 130 nur ein geringer Anteil des Strahlengangs 27 durch das Interferenzfilter 36 durchzulassen ist, können diese in einfacher Weise hergestellt werden. Ein beschädigtes erstes Interferenzfilter 36 führt umgehend zu einem eindeutig lokalisierbaren Fehler im Betrieb des zugehörigen Raman-Photometers 10, wodurch sich eine vereinfachte Reparierbarkeit ergibt. Ferner ist das Durchlass- und Reflexionsverhalten des ersten Interferenzfilters 36 in einfacher Weise und gleichzeitig exakt durch ein Computerprogrammprodukt 80 simulierbar. Folglich ist ein defektes erstes Interferenzfilter 36 zuverlässig mittels des Computerprogrammprodukts 80, das einen Digitalen Zwilling des Raman-Photometers 10 umfasst, erkennbar.

Der Aufbau und die Funktionsweise des dritten und vierten Schritts 130, 140 sind ohne Weiteres auf andere Wellenlängen, übertragbar, beispielsweise mit dem zweiten oder dritten Peak 46, 47, und damit der zweiten bzw. dritten Raman-Bande 57, 58 im Transmissionsabschnitt 59. Die technischen Vorzüge der in FIG 3 gezeigten Ausführungsform ergeben sich analog auch für solche korrespondierenden Ausführungsformen.

## Patentansprüche

1. Raman-Photometer (10), umfassend ein Grundmodul (20) mit einer Messzelle (22) zu einem Erzeugen einer Raman-Strahlung (25) durch eine Stoffprobe (15) und zumindest ein Erweiterungsmodul (30, 31, 32), **dadurch gekennzeichnet, dass** das Erweiterungsmodul (30, 31, 32) zu einem simultanen Erfassen einer ersten und einer zweiten Komponente (16, 17) der Stoffprobe (15) zumindest ein erstes teildurchlässiges Interferenzfilter (36) aufweist.

2. Raman-Photometer (10) nach Anspruch 1, **dadurch gekennzeichnet, dass** das erste Interferenzfilter (36) als Bandpassfilter für eine erste Raman-Bande (56) ausgebildet ist, die mit einer ersten Empfangsvorrichtung (41) erfassbar ist.

3. Raman-Photometer (10) nach Anspruch 2, **dadurch gekennzeichnet, dass** das erste Interferenzfilter (36) zu einem Reflektieren des Strahlengangs (27) außerhalb der ersten Raman-Bande (56) ausgebildet ist, wobei der reflektierte Strahlengang (27) zu einem zweiten teildurchlässigen Interferenzfilter (37) im Erweiterungsmodul angeordnet ist.

4. Raman-Photometer (10) nach einem der Ansprüche 1 bis 3, **dadurch gekennzeichnet, dass** das Erweiterungsmodul (30, 31, 32) zumindest drei Empfangsvorrichtungen (36, 37, 38) aufweist, die jeweils zu einem Empfangen einer Raman-Bande (56, 57, 58) ausgebildet sind.

5. Raman-Photometer (10) nach einem der Ansprüche 1 bis 4, **dadurch gekennzeichnet, dass** zumindest eine der Empfangsvorrichtungen (36, 37, 38) als Photodetektor (44) ausgebildet ist.

6. Raman-Photometer (10) nach einem der Ansprüche 1 bis 5, **dadurch gekennzeichnet, dass** zumindest eine der Empfangsvorrichtungen (36, 37, 38) frei von einem Kühlsystem ausgebildet ist.

7. Raman-Photometer (10) nach einem der Ansprüche 1 bis 6, **dadurch gekennzeichnet, dass** die Messzelle (22) zu einem Abstrahlen des Strahlengangs (27) senkrecht zu einer Strahlrichtung (26) einer Anregungslichtquelle (24) ausgebildet ist.

8. Raman-Photometer (10) nach einem der Ansprüche 1 bis 7, **dadurch gekennzeichnet, dass** die Anregungslichtquelle (24) als Laser (28) ausgebildet ist, insbesondere als Laser (28) mit einer zentralen Wellenlänge von 350 nm bis 550 nm.

9. Raman-Photometer (10) nach einem der Ansprüche 1 bis 8, **dadurch gekennzeichnet, dass** zumindest das erste Interferenzfilter (36) eine Halbwertbreite (55) von bis zu 20 nm um eine Zentralwellenlänge (54) aufweist.

10. Raman-Photometer (10) nach einem der Ansprüche 1 bis 9, **dadurch gekennzeichnet, dass** zumindest eines der teildurchlässigen Interferenzfilter (36, 37, 38) eine Zentralwellenlänge von 350 nm bis 555 nm aufweist.

11. Raman-Photometer (10) nach einem der Ansprüche 1 bis 10, **dadurch gekennzeichnet, dass** das Grundmodul (20) mit zwei bis sechs Erweiterungsmodulen (30) verbunden ist.

12. Verfahren (100) zum Messen einer Zusammensetzung (19) einer Stoffprobe (15) mittels eines Raman-Photometers (10), umfassend die Schritte:
a) Bestrahlen der Stoffprobe (15) mit einer Anregungslichtquelle (24) und Erzeugen einer Raman-Strahlung (25);
b) Optisches Lenken eines Strahlengangs (27) der Raman-Strahlung (25) auf ein erstes Interferenzfilter (36);
c) Durchlassen eines Teils der Raman-Strahlung (25) durch das erste Interferenzfilter (36) zu einer ersten Empfangsvorrichtung (41), die zu einem Erfassen einer ersten Raman-Bande (56) ausgebildet ist;
d) Zumindest teilweises Reflektieren der verbleibenden Raman-Strahlung (25) am ersten Interferenzfilter (36) zu einem zweiten Interferenzfilter (37),
wobei das zweite Interferenzfilter (37) einer zweiten Empfangsvorrichtung (42) vorgeschaltet ist, die zu einem Erfassen einer zweiten Raman-Bande (57) ausgebildet ist.

13. Verfahren (100) nach Anspruch 12, **dadurch gekennzeichnet, dass** das Erfassen der ersten Raman-Bande (56) und der zweiten Raman-Bande (57) im Wesentlichen simultan erfolgt.

14. Auswertungseinheit (60) für ein Spektrometersystem (70) zum Erfassen einer Zusammensetzung (19) einer Stoffprobe (15), die mit einem Raman-Photometer (10) verbindbar ist, **dadurch gekennzeichnet, dass** die Auswertungseinheit (10) dazu ausgebildet ist, Messsignale () von zumindest zwei Empfangsvorrichtungen (41, 42, 43) des Raman-Photometers (10) gleichzeitig zu empfangen und auszuwerten.

15. Spektrometersystem (70) zum Erfassen einer Zusammensetzung (19) einer Stoffprobe (15), umfassend ein Raman-Photometer (10) und eine damit verbundene Auswertungseinheit (60), **dadurch gekennzeichnet, dass** das Raman-Photometer (10) nach einem der Ansprüche 1 bis 11 ausgebildet ist.

16. Computerprogrammprodukt (80) zum Simulieren eines Betriebsverhaltens eines Raman-Photometers (10), umfassend ein Physik-Modul, das zu einem Simulieren () eines Reflexionsverhaltens und Transmissionsverhaltens eines Interferenzfilters (36, 37, 38) ausgebildet ist, **dadurch gekennzeichnet, dass** das Raman-Photometer (10) nach einem der Ansprüche 1 bis 11 ausgebildet ist.
